(19) Europäisches Patentamt
European Patent Office
Office européen des brevets

(11) Veröffentlichungsnummer: **0 548 657 A1**

(12) # EUROPÄISCHE PATENTANMELDUNG

(21) Anmeldenummer: **92120881.5**

(51) Int. Cl.⁵: **C08F 8/30**, C08F 8/48

(22) Anmeldetag: **08.12.92**

(30) Priorität: **21.12.91 DE 4142573**

(43) Veröffentlichungstag der Anmeldung:
**30.06.93 Patentblatt 93/26**

(84) Benannte Vertragsstaaten:
**BE DE FR GB NL**

(71) Anmelder: **BASF Aktiengesellschaft**
**Carl-Bosch-Strasse 38**
**W-6700 Ludwigshafen(DE)**

(72) Erfinder: **Besecke, Siegmund, Dr.,p.A. Erich Besecke**
**Niborgstrasse 11**
**W-3250 Hameln(DE)**
Erfinder: **Deckers, Andreas, Dr.**
**Eschenbachstrasse 48**
**W-6700 Ludwigshafen(DE)**
Erfinder: **Lauke, Harald, Dr.**
**Sophienstrasse 10**
**W-6800 Mannheim 1(DE)**

(54) **Poly(meth)acrylimide mit unterschiedlicher N-Substitution.**

(57) Polymerisat, enthaltend im wesentlichen mindestens zwei unterschiedliche wiederholte Einheiten der Formel I

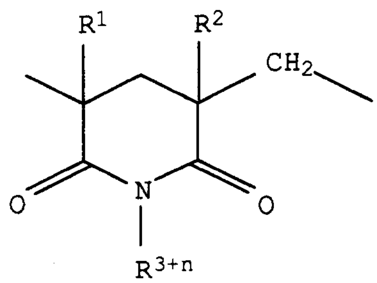

I

in denen

$R^1$ und $R^2$ für Wasserstoff oder Methyl stehen

n 0 oder eine ganze Zahl von 1 bis 9 bedeutet

$R^{3+n}$ zwei bis 10 voneinander unterschiedliche Gruppen darstellt und jeweils Wasserstoff, $C_1$-$C_{22}$-Alkyl, $C_5$-$C_8$-Cycloalkyl, $C_6$-$C_{10}$-Aryl oder $C_6$-$C_{10}$-Aryl-$C_1$-$C_4$-alkyl bedeutet, wobei diese Reste, mit Ausnahme der $C_1$-$C_{22}$-Alkyl-Reste, bis zu dreifach mit Resten, ausgewählt aus der Gruppe bestehend aus $C_1$-$C_4$-Alkyl, $C_1$-$C_4$-Alkoxy und Halogen, substituiert sein können,

erhältlich durch Umsetzen eines Polymeren auf Basis von $C_1$-$C_{20}$-Alkylestern der (Meth)Acrylsäure mit Ammoniak und ein bis neun primären Aminen oder einer Mischung von zwei bis zehn primären Aminen der allgemeinen Formel II

$R^{3+n}NH_2$ II

EP 0 548 657 A1

Die Erfindung betrifft ein Polymerisat, enthaltend im wesentlichen mindestens zwei unterschiedliche wiederholte Einheiten der Formel I

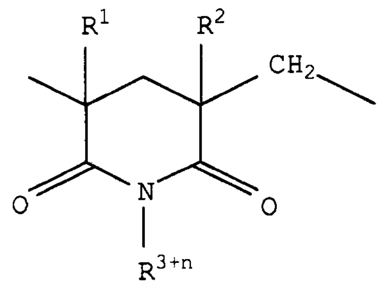

I

in denen

- $R^1$ und $R^2$ für Wasserstoff oder Methyl stehen,
- n 0 oder eine ganze Zahl von 1 bis 9 bedeutet
- $R^{3+n}$ zwei bis zehn voneinander unterschiedliche Gruppen darstellt und jeweils Wasserstoff, $C_1$-$C_{22}$-Alkyl, $C_5$-$C_8$-Cycloalkyl, $C_6$-$C_{10}$-Aryl oder $C_6$-$C_{10}$-Aryl-$C_1$-$C_4$-alkyl bedeutet, wobei diese Reste, mit Ausnahme der $C_1$-$C_{22}$-Alkyl-Reste, bis zu dreifach mit Resten, ausgewählt aus der Gruppe bestehend aus $C_1$-$C_4$-Alkyl, $C_1$-$C_4$-Alkoxy und Halogen, substituiert sein können,

erhältlich durch Umsetzen eines Polymeren auf Basis von $C_1$-$C_{20}$-Alkylestern der (Meth)Acrylsäure mit Ammoniak und ein bis neun primären Aminen oder einer Mischung von zwei bis zehn primären Aminen der allgemeinen Formel II

$R^{3+n}NH_2$ II

Ferner betrifft die Erfindung ein Verfahren zur Herstellung dieser Polymerisate, deren Verwendung zur Herstellung von Formkörpern sowie Formkörper aus diesen Polymerisaten.

Zur Erhöhung der Wärmeformbeständigkeit von Acrylat-Formmassen, insbesondere von Polymethylmethacrylat ("PMMA"), kann man diese in einer polymeranalogen Umsetzung mit primären Aminen unter Ausbildung zyklischer Imidstrukturen zur Reaktion bringen. Dies kann sowohl in Schmelze als auch in Lösung erfolgen. So wird beispielsweise in der US-A 2,146,209 die Herstellung von imidhaltigen Polymeren durch Umsetzung von PMMA mit Ammoniak, Harnstoff sowie dessen Derivate und aliphatischen Aminen beschrieben.

Um die Gelbstichigkeit zu vermindern sowie um die Transparenz der Produkte aus der US-A 2,146,209 zu verbessern, wurde in der EP-B 234,726 vorgeschlagen, die Imidisierung in einem Lösungsmittelgemisch bestehend aus einem aromatischen Kohlenwasserstoff und einem aliphatischen Alkohol durchzuführen.

Eine lösungsmittelfreie Imidisierung in einem Extruder wird in der US-A 4,246,374 beschrieben.

Nachteilig an den bisher beschriebenen Poly(meth)acrylimiden sind ihre nicht zufriedenstellenden Werte in der Wärmeformbeständigkeit, der Spannungsrißbeständigkeit bei gleichzeitig sehr guten Werten in der Transparenz und der Witterungsstabilität.

Der Erfindung lag daher die Aufgabe zugrunde, Poly(meth)acrylimide zur Verfügung zu stellen, die die oben genannten Nachteile nicht aufweisen.

Demgemäß wurden die eingangs definierten Polymerisate gefunden.

Außerdem wurden ein Verfahren zur Herstellung dieser Polymerisate, deren Verwendung zur Herstellung von Formkörpern sowie Formkörper, erhältlich aus diesen Polymerisaten, gefunden.

Unter den Polymerisaten auf Basis von $C_1$-$C_{20}$-Alkylestern der (Meth)Acrylsäure sind sowohl Homo- als auch Copolymere zu verstehen, wobei die Copolymeren noch andere ethylenisch ungesättigte Comonomere enthalten können.

Als $C_1$-$C_{20}$-Alkylester der Methacrylsäure kommen bevorzugt die $C_1$-$C_4$-Alkylester wie Methylmethacrylat ("MMA"), Ethylmethacrylat, Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als $C_1$-$C_{20}$-Alkylester der Acrylsäure verwendet man bevorzugt die $C_1$-$C_4$-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als ethylenisch ungesättigte Comonomere kann man Acrylsäure, Methacrylsäure, Maleinsäurederivate wie Imide und $C_1$-$C_{10}$-Alkylester, Itaconsäurederivate wie Imide und $C_1$-$C_{10}$-Alkylester, Acryl- und Methacrylnitril, Styrol, $\alpha$-Methylstyrol, Ethylen, Propylen und Butadien sowie Mischungen dieser Monomeren, einsetzen.

Die Polymerisate können ein- oder mehrstufig hergestellt werden, wobei bei mehrstufiger Polymerisation wenigstens die äußere Stufe Gruppen enthalten muß, die imidisiert werden können.

Im allgemeinen sind die Polymerisate zu mehr als 50, bevorzugt zu mehr als 80 Gew.-% aus $C_1$-$C_{20}$-Alkylestern der Methacrylsäure und Acrylsäure aufgebaut. Als besonders vorteilhaft haben sich nach bisherigen Beobachtungen Polymerisate aus 80 bis 100 Gew.-% Methylmethacrylat und 0 bis 20 Gew.-% Methylacrylat mit einem Molekulargewicht (Gewichtsmittelwert $\overline{M}_w$) im Bereich von 20.000 bis 300.000 g/mol erwiesen.

Als Imidisierungsreagenzien kommen neben Ammoniak primäre Amine, $R^{3+n}NH_2$, zur Anwendung, die ausgewählt sind aus der Gruppe bestehend aus $C_1$-$C_{22}$-Alkylamin, $C_5$-$C_8$-Cycloalkylamin, $C_6$-$C_{10}$-Arylamin, $C_6$-$C_{10}$-Aryl-$C_1$-$C_4$-alkylamin, wobei die Cycloalkyl-, Aryl- und Aralkyl-Reste der Amine bis zu dreifach mit Resten, ausgewählt aus der Gruppe bestehend aus $C_1$-$C_4$-Alkyl, $C_1$-$C_4$-Alkoxy und Halogen wie Fluor, Chlor und Brom, substituiert sein können.

Beispielhaft seien genannt Methylamin, Ethylamin, n-Propylamin, i-Propylamin, n-Butylamin, 1-Methylpropylamin, 2-Methylpropyl-amin, 1,1-Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n-Octylamin, n-Nonylamin, n-Decylamin, n-Undecylamin, n-Dodecylamin, Stearylamin, Cyclopentylamin, Cyclohexylamin, Cycloheptylamin, Cyclooctylamin, Anilin, 2-, 3-, 4-Methylanilin, 2-, 3-, 4-Methoxyanilin, 2-, 3-, 4-Chloranilin, 2-, 3-, 4-Bromanilin, Benzylamin, Phenethylamin und Phenylpropylamin, besonders bevorzugt Cyclohexylamin.

Gemäß der vorliegenden Erfindung werden mindestens zwei primäre Amine bzw. Ammoniak und mindestens ein primäres Amin verwendet, wodurch "maßgeschneiderte" Poly(meth)acrylimide zugänglich werden.

Beispielsweise kann man die Fließfähigkeit dadurch verbessern, daß man eine Mischung aus einem langkettigen Amin, $R^3NH_2$, wobei $R^3$ = $C_{12}$-$C_{18}$-Alkyl, für ein gutes Fließverhalten, und einem kurzkettigen oder zyklischen Amin, $R^4NH_2$, mit $R^4$ = $C_1$-$C_4$-Alkyl oder $C_5$-$C_8$-Cycloalkyl, zur Aufrechterhaltung einer guten Wärmeformbeständigkeit, zur Imidisierung einsetzt.

Desweiteren kann man den Brechungsindex eines Poly(meth)acrylimids unter Beibehaltung einer guten Bewitterungsstabilität anheben, indem man eine Mischung aus einem aromatischen Amin, $R^3$ = Aryl wie Phenyl, zur Anhebung des Brechungsindex, und einem kurzkettigen Alkylamin, $R^4$ = $C_1$-$C_4$-Alkyl wie Methyl, Ethyl, n-Propyl, i-Propyl, n-Butyl, i-Butyl, sek.-Butyl, tert.Butyl, oder einem Cycloalkylamin, $R^4$ = $C_5$-$C_8$-Cycloalkyl wie Cyclopentyl, Cyclohexyl, Cycloheptyl, Cyclooctyl, zur Beibehaltung einer guten Bewitterungsstabilität, einsetzt.

Auch kann man die Verträglichkeit von Blends verschiedener Polymerer mit Poly(meth)acrylimid durch Wahl der Substituenten am Stickstoffatom des Imidringes beeinflussen. So kann man als Verträglichkeitsvermittler für aromatische Blendkomponenten wie Polycarbonat, Polystyrol, Polyethersulfone oder Polyetherketone als Rest $R^3$ Aryl wie Phenyl oder substituiertes Phenyl einsetzen. Für polare (pfropfaktive) Blendkomponenten wie Polyamide wählt man bevorzugt für $R^3$ Wasserstoff. Als weitere, zweite Komponente $R^4$ wählt man bevorzugt in den beiden genannten Fällen einen kurzkettigen $C_1$-$C_4$-Alkylrest oder einen $C_5$-$C_8$-Cycloalkylrest zur Aufrechterhaltung der hohen Wärmeformbeständigkeit und guten Witterungsstabilität.

Selbstverständlich kann es zur weiteren Feinabstimmung auch sinnvoll sein, neben $R^3$ und $R^4$ weitere N-Substituenten ($R^5$ bis $R^{12}$) in Form weiterer Amine $R^5NH_2$ bis $R^{12}NH_2$ einzuführen.

Die Reaktion führt man in der Regel so durch, daß man eine Mischung bestehend aus Acrylat-Polymer, den Aminen bzw. Ammoniak und dem oder den Aminen in einem Lösungsmittel oder einem Lösungsmittelgemisch unter Sauerstoffausschluß erhitzt. Unter Normalbedingungen gasförmige Edukte wie Ammoniak und Methylamin bringt man wie üblich unter Druck oder kondensiert in das Reaktionsgefäß ein.

Die Amine sowie den Ammoniak kann man dabei gleich zu Beginn vorlegen oder beispielsweise kontinuierlich in dem Maße wie sie verbraucht werden zugeben.

Die Reaktion kann man sowohl kontinuierlich als auch diskontinuierlich durchführen.

Das Gewichtsverhältnis der eingesetzten Amine und des Ammoniaks zu Acrylat-Polymer wählt man im allgemeinen im Bereich von 1:1 bis 400:1, bevorzugt von 1:1 bis 200:1.

Als Lösungsmittel kann man prinzipiell alle Stoffe verwenden, in denen sowohl das polymere Ausgangsmaterial als auch das erfindungsgemäße Poly(meth)acrylimid löslich sind. Beispielhaft seien genannt aromatische Lösungsmittel wie Benzol, Toluol, Xylol

Alkohole wie Methanol, Ethanol, n-, i-Propanol, Diethylenglykol
aprotische, polare Lösungsmittel wie
N,N'-disubstituierte, cyclische oder acyclische Carbonsäureamide wie Dimethylformamid, Diethylformamid, Dimethylacetamid, Diethylacetamid
N-Methyl-2-pyrrolidon, N-Ethyl-2-pyrrolidon
N,N,N',N'-tetrasubstituierte, cyclische oder acyclische Harnstoffe wie Tetramethylharnstoff
N-substituierte, cyclische oder acyclische (Poly)Amine wie Dicyclohexylmethylamin, Dimethylcyclohexylamin, N,N,N',N'-Tetramethylethylendiamin,N,N,N',N'-Tetramethylhexamethylendiamin
Ether wie Ethylenglykoldimethylether, Diethylenglykoldimethylether
Alkylencarbonate wie Ethylencarbonat, Propylencarbonat
andere übliche aprotische und polare Lösungsmittel wie Nitroalkane wie Nitromethan, Dimethylsulfoxid, Diphenylsulfoxid und Sulfolan, wobei N-Methylpyrrolidon bevorzugt ist,
sowie Mischungen davon, bevorzugt eine Mischung aus Toluol und Methanol.

Das Gewichtsverhältnis von verwendetem Lösungsmittel bzw. Lösungsmittelgemisch zu Polymer liegt in der Regel im Bereich von 1:1 bis 100:1, bevorzugt von 1:1 bis 10:1.

Die Reaktion kann man sowohl mit als auch ohne Lösungsmittel durchführen, wobei man bei der Imidierung auf einem Extruder vorteilhaft ohne Lösungsmittel arbeitet.

Die Reaktionstemperatur liegt in der Regel im allgemeinen im Bereich von 100 bis 350 °C, bevorzugt im Bereich von 120 bis 270 °C.

Der Reaktionsdruck ist in der Regel unkritisch. Man arbeitet in Lösung im allgemeinen im Bereich von 80 bis 250 kPa, bevorzugt unter Atmosphärendruck.

Die Wahl des pH-Bereiches ist ebenfalls unkritisch und liegt wegen der eingesetzten Amine bzw. des eingesetzten Ammoniaks oberhalb von pH 7.

Die Reaktionszeit liegt in der Regel im Bereich von 0,01 bis 100 h, bevorzugt von 0,05 bis 20 h.

Desweiteren kann man dem Reaktionsgemisch Katalysatoren in Mengen im Bereich von 0,01 bis 10 Gew.-%, bezogen auf das eingesetzte Polymer, zur Beschleunigung der Reaktion zusetzen. Beispielhaft seien genannt tertiäre Amine wie Tricyclohexylamin,
substituierte Guanidine wie 1,1,3,3-Tetramethylguanidin, 1,3-Diphenylguanidin
tetrasubstituierte Alkylammoniumverbindungen wie Trimethylstearylammoniumchlorid
organische Titanverbindungen wie Tetrapropoxytitan, Tetrabutoxytitan
organische Zinnverbindungen wie Dibutylzinnoxid, Dibutylzinndidodecanat
aromatische Amine wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl,
Imide wie N,N'-Dicyclohexylcarbodiimid
sowie Antimontrioxid, Zinndioxid, Natriumamid, Natrium- und Kaliumalkoholate wie Natrium- und Kaliummethanolat, Ammoniumchlorid und Ammoniumiodid.

Das erfindungsgemäße Poly(meth)acrylimid kann man nach üblichen Methoden verarbeiten, z.B. durch Spritzguß, Extrusion oder Sintern zur Herstellung von Formkörpern.

Die erfindungsgemäßen Poly(meth)acrylimide zeichnen sich im Vergleich zu PMMA oder Mischungen zweier unterschiedlicher ("Homo"-)Poly(meth)acrylimide durch ihre hohe Wärmeformbeständigkeit und Spannungsrißbeständigkeit auf gleichzeitig hohen Niveaus der Werte für die Transparenz und Witterungsstabilität aus.

Im Gegensatz zu bekannten Poly(meth)acrylimiden weisen die erfindungsgemäßen Poly(meth)-acrylimide eine verbesserte Fließfähigkeit auf.

## Beispiele

### Beispiel 1

In einem Druckautoklaven wurde eine Lösung von 200 g PMMA (aus 99 Gew.-% MMA und 1 Gew.-% MA mit einem mittleren Molekulargewicht ($\overline{M}_w$) von 115 000 g/mol) in einem Lösungsmittelgemisch, bestehend aus 540 g Toluol und 60 g Methanol, mit 1,5 mol Methylamin und 0,5 mol Ammoniak versetzt, wobei die beiden Stickstoffverbindungen durch Kondensation in den Autoklaven eingebracht wurden. Anschließend wurde der Autoklav auf eine Temperatur von 230 °C erhitzt. Nach 8 h wurde abgekühlt und das gebildete Polymer in 1200 ml Methanol ausgefällt und bei 50 °C (und 10 kPa) getrocknet.

Die Ergebnisse der Qualitätsprüfungen sind Tabelle 1 zu entnehmen.

Beispiele 2 bis 8

Analog zu Beispiel 1 wurden 200 g PMMA (gleiche Zusammensetzung wie in Beispiel 1) mit jeweils 2 mol eines Gemisches aus Aminen oder einem Amin und Ammoniak bei 230 °C in 600 g des in Beispiel 1 verwendeten Lösungsmittelgemisches während 8 h umgesetzt und wie oben aufgearbeitet.

Die Ergebnisse der Qualitätsprüfungen sind der Tabelle zu entnehmen.

Die Bestimmung der Glasübergangstemperatur $T_g$ der Polymere erfolgte nach der DSC-Methode (ASTM D 3418-82) auf einem DSC-30-Gerät der Fa.Mettler.

Tabelle: Imidisierungsversuche

| Bsp.-Nr. | $R^3-NH_2$ (Mol-%) $R^3$ | $R^4-NH_2$ (Mol-%) $R^4$ | N-Gehalt[1)] [%] | theor. Imid-Gehalt[2)] [%] | $T_g$ [°C] |
|---|---|---|---|---|---|
| 1 | $CH_3$ (75) | H (25) | 8,4 | 97 | 199 |
| 2 | $CH_3$ (25) | H (75) | 8,3 | 93 | 208 |
| 3 | $CH_3$ (25) | $c-C_6H_{11}$ (75) | 6,0 | 94 | 185 |
| 4 | $CH_3$ (75) | $c-C_6H_{11}$ (25) | 7,4 | 97 | 188 |
| 5 | $CH_3$ (90) | $C_8H_{17}$ (10) | 7,2 | 91 | 171 |
| 6 | $C_6H_5$ (90) | $C_{10}H_7$ (10) | 5,1 | 85 | 216 |
| 7 | $C_6H_5$ (25) | $c-C_6H_{11}$ (75) | 5,8 | 96 | 201 |
| 8 | $CH_3$ (25)/$c-C_6H_{11}$ (70)/$C_{18}H_{37}$ (5) | | 5,8 | 93 | 179 |

1) Stickstoffgehalt aus Elementaranalyse

2) Theoretischer Imid-Gehalt berechnet aus:

$$= \frac{X\ \%\ N\ (\text{aus Elementaranalyse})}{Y\ \%\ N\ (\text{theor. max. Wert})} \times 100\ \%$$

**Patentansprüche**

1. Polymerisat, enthaltend im wesentlichen mindestens zwei unterschiedliche wiederholte Einheiten der Formel I

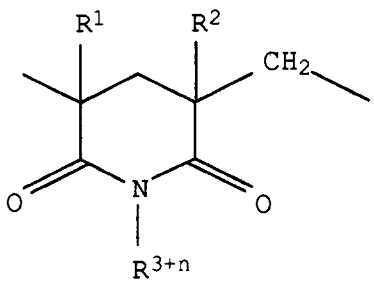

I

in denen

$R^1$ und $R^2$ für Wasserstoff oder Methyl stehen,

n 0 oder eine ganze Zahl von 1 bis 9 bedeutet

$R^{3+n}$ zwei bis zehn voneinander unterschiedliche Gruppen darstellt und jeweils Wasserstoff, $C_1$-$C_{22}$-Alkyl, $C_5$-$C_8$-Cycloalkyl, $C_6$-$C_{10}$-Aryl oder $C_6$-$C_{10}$-Aryl-$C_1$-$C_4$-alkyl bedeutet, wobei diese Reste, mit Ausnahme der $C_1$-$C_{22}$-Alkyl-Reste, bis zu dreifach mit Resten, ausgewählt aus der Gruppe bestehend aus $C_1$-$C_4$-Alkyl, $C_1$-$C_4$-Alkoxy und Halogen, substituiert sein können,

erhältlich durch Umsetzen eines Polymeren auf Basis von $C_1$-$C_{20}$-Alkylestern der (Meth)Acrylsäure mit Ammoniak und ein bis neun primären Aminen oder einer Mischung von zwei bis zehn primären Aminen der allgemeinen Formel II

$R^{3+n}NH_2$ II

2. Verfahren zur Herstellung eines Polymerisates gemäß Anspruch 1, dadurch gekennzeichnet, daß man ein Polymer auf Basis von $C_1$-$C_{20}$-Alkylestern der (Meth)Acrylsäure mit Ammoniak und ein bis neun primären Aminen oder einer Mischung von zwei bis zehn primären Aminen der allgemeinen Formel II

$R^{3+n}NH_2$ II

umsetzt.

3. Verwendung der Polymerisate gemäß Anspruch 1 zur Herstellung von thermoplastischen Formkörpern.

4. Formkörper, erhältlich aus Polymerisaten gemäß Anspruch 1.

Europäisches Patentamt

# EUROPÄISCHER RECHERCHENBERICHT

Nummer der Anmeldung

EP 92 12 0881

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 284 425 (G. SCHRÖDER)<br>* das ganze Dokument *<br>--- | 1-4 | C08F8/30<br>C08F8/48 |
| X | GB-A-910 144 (ROHM & HAAS)<br>* das ganze Dokument *<br>--- | 1-4 | |
| X | FR-A-2 393 818 (GAF CORPORATION)<br>* Seite 2; Ansprüche 1-7 *<br>--- | 1-4 | |
| A | EP-A-0 300 760 (MITSUBISHI RAYON CO., LTD.)<br>* Ansprüche 1-9 *<br>--- | 1 | |
| A | PATENT ABSTRACTS OF JAPAN<br>vol. 10, no. 230 (C-365)(2286) 9. August 1986<br>& JP-A-61 064 703 ( MITSUBISHI RAYON CO., LTD. ) 3. April 1986<br>* Zusammenfassung *<br>--- | 1 | |
| P,X | EP-A-0 503 797 (MITSUBISHI RAYON CO., LTD.)<br>* das ganze Dokument *<br>--- | 1-4 | RECHERCHIERTE SACHGEBIETE (Int. Cl.5) |
| E,X | EP-A-0 524 492 (RÖHM GMBH)<br>* das ganze Dokument *<br>----- | 1-4 | C08F |

Der vorliegende Recherchenbericht wurde für alle Patentansprüche erstellt

| Recherchenort | Abschlußdatum der Recherche | Prüfer |
|---|---|---|
| DEN HAAG | 30 MAERZ 1993 | PERMENTIER W.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)